# EUROPEAN PATENT APPLICATION

(11) **EP 4 656 497 A1**
(43) Date of publication of application: **03.12.2025**
(21) Application number: 23927130.7
(22) Date of filing: 07.11.2023
(51) Int. Cl.: B62D 6/00, B62D 137/00

(54) **STEER-BY-WIRE SYSTEM AND REDUNDANT BACKUP METHOD AND APPARATUS THEREFOR, AND STORAGE MEDIUM AND VEHICLE**

(30) Priority: 10.03.2023 CN 202310257419
(71) Applicant: Zhejiang Geely Holding Group Co., Ltd., Hangzhou, Zhejiang 310051 (CN); Ningbo Geely Automobile Research & Development Co. Ltd., Hangzhou Bay New District Ningbo 315336 (CN)
(72) Inventor: SONG, Huaiwen, Hangzhou, Zhejiang 310051 (CN); TU, Su, Hangzhou, Zhejiang 310051 (CN); LIANG, Jianping, Hangzhou, Zhejiang 310051 (CN); HUANG, Siting, Hangzhou, Zhejiang 310051 (CN); MENG, Fanpo, Hangzhou, Zhejiang 310051 (CN); XU, Hailong, Hangzhou, Zhejiang 310051 (CN); XU, Ting, Hangzhou, Zhejiang 310051 (CN); YANG, Pengfei, Hangzhou, Zhejiang 310051 (CN)
(74) Representative: Kraus & Lederer PartGmbB
(86) International application number: PCT/CN2023/130274
(87) International publication number: WO 2024/187789

(57) **Abstract**

Provided are a redundant backup method and apparatus for a steering-by-wire system, a storage medium, and a vehicle. The steering-by-wire system includes a steering feel simulation unit and a steering execution unit. The method includes: determining that a steering angle output signal of the steering feel simulation unit is not obtained (S1); receiving a target steering angle transmitted by a controller of a vehicle (S2); and controlling the steering execution unit to perform lateral movement based on the target steering angle (S3).

## Description

### CROSS-REFERENCE TO RELATED APPLICATION

The present application claims priority to Chinese patent application No. 202310257419.4, titled "steering-by-wire system and redundant backup method and apparatus therefor, storage medium, and vehicle" and filed on March 10, 2023, the entire contents of which are incorporated herein by reference.

### FIELD

The present disclosure relates to the field of vehicle technologies, and more particularly, to a steering-by-wire system and a redundant backup method and apparatus therefor, a storage medium, and a vehicle.

### BACKGROUND

According to the ISO26262 functional safety development specification, the highest functional safety goal for electronic and electrical systems is ASILD. For the steering-by-wire system, the mechanical connection between the steering wheel and the steering mechanism is eliminated, and the information transmission and control of steering are completely realized through electrical signals. Without the mechanical connection as the last line of defense, the mere ASILD requirement in the steering system is insufficient to meet the realization of functional safety scenarios for the steering-by-wire system, which causes the vehicle to lose its ability of lateral movement, resulting in a safety hazard of loss of vehicle control.

### SUMMARY

The present disclosure aims to solve at least one of the technical problems in the related art to a certain extent. To this end, a first objective of the present disclosure is to provide a redundant backup method for a steering-by-wire system, which can improve the fault tolerance performance of the steering-by-wire system and ensure the accuracy of vehicle lateral control by receiving a target steering angle transmitted by a controller of a vehicle and controlling a steering execution unit to perform lateral movement based on the target steering angle when a steering angle output signal of a steering feel simulation unit is not obtained.

A second objective of the present disclosure is to provide a redundant backup apparatus for a steering-by-wire system.

A third objective of the present disclosure is to provide a computer-readable storage medium.

A fourth objective of the present disclosure is to provide a steering-by-wire system.

A fifth objective of the present disclosure is to provide a vehicle.

To achieve the above objectives, embodiments in a first aspect of the present disclosure provide a redundant backup method for a steering-by-wire system. The steering-by-wire system includes a steering feel simulation unit and a steering execution unit. The method includes: determining that a steering angle output signal of the steering feel simulation unit is not obtained; receiving a target steering angle transmitted by a controller of a vehicle; and controlling the steering execution unit to perform lateral movement based on the target steering angle.

With the redundant backup method for the steering-by-wire system according to the embodiments of the present disclosure, the steering angle output signal of the steering feel simulation unit is determined to be not obtained, the target steering angle transmitted by the controller of the vehicle is received, and the steering execution unit is controlled to perform the lateral movement based on the target steering angle. In this way, this method can improve fault tolerance performance of the steering-by-wire system and ensure accuracy of vehicle lateral control.

In addition, the redundant backup method for the steering-by-wire system according to the above-described embodiments of the present disclosure may also have the following additional technical features.

According to an embodiment of the present disclosure, the steering feel simulation unit includes at least one angle sensor. The steering feel simulation unit is communicatively connected to the steering execution unit through a CAN bus. Said determining that the steering angle output signal of the steering feel simulation unit is not obtained includes: determining that the steering angle output signal of the steering feel simulation unit is not obtained when the at least one angle sensor fails or the CAN bus fails.

According to an embodiment of the present disclosure, when the at least one angle sensor includes a plurality of angle sensors, the plurality of angle sensors serve as backups for each other.

According to an embodiment of the present disclosure, the target steering angle is obtained by a steering wheel angle sensor of the vehicle. The steering wheel angle sensor is communicatively connected to the steering-by-wire system through a CAN bus.

According to an embodiment of the present disclosure, when the steering-by-wire system is operating normally, the redundant backup method for the steering-by-wire system further includes: obtaining a functional safety level of a steering angle signal for controlling the steering execution unit; and decomposing functional safety levels of the target steering angle and the steering angle output signal based on the functional safety level of the steering angle signal.

According to an embodiment of the present disclosure, the redundant backup method for the steering-by-wire system further includes: controlling the steering execution unit to perform lateral movement based on the steering angle output signal and obtaining an angular position of the steering execution unit, when the steering angle output signal of the steering feel simulation unit is obtained; and synchronizing the steering angle output signal and the target steering angle based on the angular position of the steering execution unit.

To achieve the above-described objectives, embodiments in a second aspect of the present disclosure provide a redundant backup apparatus for a steering-by-wire system. The steering-by-wire system includes a steering feel simulation unit and a steering execution unit. The apparatus includes: a determination module configured to determine that a steering angle output signal of the steering feel simulation unit is not obtained; a receiving module configured to receive a target steering angle transmitted by a controller of a vehicle; and a control module configured to control the steering execution unit to perform lateral movement based on the target steering angle.

With the redundant backup apparatus for the steering-by-wire system according to the embodiments of the present disclosure, the determination module is configured to determine that the steering angle output signal of the steering feel simulation unit is not obtained, the receiving module is configured to receive the target steering angle transmitted by the controller of the vehicle, and the control module is configured to control the steering execution unit to perform the lateral movement based on the target steering angle. In this way, this apparatus can improve fault tolerance performance of the steering-by-wire system and ensure accuracy of vehicle lateral control.

To achieve the above-described objectives, embodiments in a third aspect of the present disclosure provide a computer-readable storage medium having a redundant backup program for a steering-by-wire system stored thereon. The redundant backup program for the steering-by-wire system, when executed by a processor, implements the above-described redundant backup method for the steering-by-wire system.

The computer-readable storage medium according to the embodiments of the present disclosure can improve fault tolerance performance of the steering-by-wire system and ensure accuracy of vehicle lateral control by implementing the above-described redundant backup method for the steering-by-wire system during execution.

To achieve the above-described objectives, embodiments in a fourth aspect of the present disclosure provide a steering-by-wire system. The steering-by-wire system includes: a steering feel simulation unit; a steering execution unit; a memory; a processor; and a redundant backup program for a steering-by-wire system stored in the memory and executable on the processor. The processor implements, when executing the redundant backup program for the steering-by-wire system, the above-described redundant backup method for the steering-by-wire system.

The steering-by-wire system according to the embodiments of the present disclosure can improve fault tolerance performance of the steering-by-wire system and ensure accuracy of vehicle lateral control by executing the above-described redundant backup method for the steering-by-wire system.

To achieve the above objectives, embodiments in a fifth aspect of the present disclosure provide a vehicle including the above-described steering-by-wire system.

The vehicle according to the embodiments of the present disclosure can improve fault tolerance performance of the steering-by-wire system and ensure accuracy of vehicle lateral control by including the above-described steering-by-wire system.

Additional aspects and advantages of the present disclosure will be provided at least in part in the following description, or will become apparent at least in part from the following description, or can be learned from practicing of the present disclosure.

### BRIEF DESCRIPTION OF THE DRAWINGS

The above and/or additional aspects and advantages of the present disclosure will become more apparent and more understandable from the following description of embodiments taken in conjunction with the accompanying drawings.
FIG. 1 is a flowchart of a redundant backup method for a steering-by-wire system according to an embodiment of the present disclosure.
FIG. 2 is a system diagram of a redundant backup for a steering-by-wire system according to an embodiment of the present disclosure.
FIG. 3 is a flowchart of a redundant backup method for a steering-by-wire system according to a specific embodiment of the present disclosure.
FIG. 4 is a schematic block diagram of a redundant backup apparatus for a steering-by-wire system according to an embodiment of the present disclosure.
FIG. 5 is a schematic block diagram of a steering-by-wire system according to an embodiment of the present disclosure.
FIG. 6 is a schematic block diagram of a vehicle according to an embodiment of the present disclosure.

### DETAILED DESCRIPTION OF THE EMBODIMENTS

Embodiments of the present disclosure will be described in detail below with reference to examples thereof as illustrated in the accompanying drawings, throughout which same or similar elements, or elements having same or similar functions, are denoted by same or similar reference numerals. The embodiments described below with reference to the drawings are illustrative only, and are intended to explain, rather than limit, the present disclosure.

A redundant backup method for a steering-by-wire system, a redundant backup apparatus for a steering-by-wire system, a computer-readable storage medium, a steering-by-wire system, and a vehicle according to the embodiments of the present disclosure are described below with reference to the accompanying drawings.

In an embodiment of the present disclosure, the steering-by-wire system may include two upper and lower electrical systems, namely, a steering feel simulation unit HWA and a steering execution unit RWA. A torque and angle sensor TAS may be configured in the steering feel simulation unit HWA, and an absolute angle sensor AAS may be configured in the steering execution unit RWA. A purpose of the TAS is to detect a driver's target steering angle, the RWA is executed based on the target angle to control lateral movement of the vehicle, and the AAS is configured to feed back an angular position of the RWA, achieving closed-loop angle control.

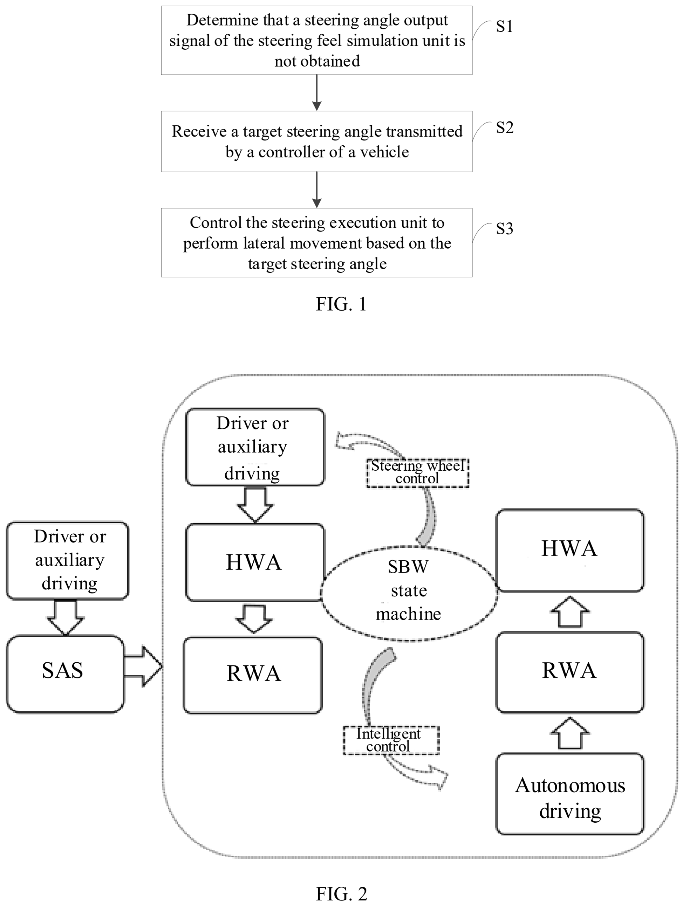

FIG. 1 is a flowchart of a redundant backup method for a steering-by-wire system according to an embodiment of the present disclosure.

As illustrated in FIG. 1, the redundant backup method for the steering-by-wire system according to the embodiments of the present disclosure may include the following operations at blocks.

At block S1, a steering angle output signal of the steering feel simulation unit is determined to be not obtained.

At block S2, a target steering angle transmitted by a controller of a vehicle is received.

At block S3, the steering execution unit is controlled to perform lateral movement based on the target steering angle.

In an exemplary embodiment, due to a design of mechanical decoupling between a steering wheel to wheels in the steering-by-wire system, in a steering wheel control mode, the steering feel simulation unit generates the driver's target steering angle, and the steering execution unit executes target steering to realize the lateral movement of the vehicle. However, when an angle sensor in the steering feel simulation unit fails or a signal is unable to be transmitted normally in the system, the steering angle output signal of the steering feel simulation unit is determined to be not obtained currently. In this case, the steering execution unit cannot receive the target steering angle that reflects a driver's intention, which allows the vehicle to lose an ability of lateral movement, resulting in a safety hazard of loss of vehicle control. Therefore, to improve fault tolerance performance of the steering-by-wire system, as illustrated in FIG. 2, a sensor (SAS) can be set outside the steering-by-wire system to obtain the driver's target steering angle and receive the target steering angle sent by the controller of the vehicle when the steering angle output signal of the steering feel simulation unit is not obtained. The steering execution unit can control the vehicle to perform the lateral movement based on the target steering angle sent by the controller of the vehicle. In this way, fault tolerance performance of vehicle lateral control can be improved, avoiding the safety hazard caused by loss of vehicle control.

A specific operating process of the redundant backup method for the steering-by-wire system of the present disclosure is described in detail below.

According to an embodiment of the present disclosure, the steering feel simulation unit includes at least one angle sensor. The steering feel simulation unit is communicatively connected to the steering execution unit through a CAN bus. Said determining that the steering angle output signal of the steering feel simulation unit is not obtained includes: determining that the steering angle output signal of the steering feel simulation unit is not obtained when the at least one angle sensor fails or the CAN bus fails.

Further, according to an embodiment of the present disclosure, when the at least one angle sensor includes a plurality of angle sensors, the plurality of angle sensors serve as backups for each other.

In an exemplary embodiment, the steering feel simulation unit includes at least one angle sensor. For example, the steering feel simulation unit may include the torque and angle sensor TAS. One or more angle sensors may be disposed in the steering feel simulation unit. When the plurality of angle sensors are provided, the plurality of angle sensors serve as backups for each other. For example, the steering feel simulation unit includes two torque and angle sensors TAS. When one of the two torque and angle sensors TAS fails, another torque and angle sensor TAS can continue to operate, obtaining the steering angle, and the steering execution unit allows the vehicle to achieve the lateral movement based on the steering angle. The steering feel simulation unit is communicatively connected to the steering execution unit through the CAN bus. When determining whether the steering angle output signal of the steering feel simulation unit is obtained, it can be determined based on whether the angle sensor fails or whether the CAN bus fails. That is, when the current angle sensor fails, the steering execution unit can be determined to not obtain the steering angle output signal of the steering feel simulation unit, or when the CAN bus fails, the steering feel simulation unit is unable to be in normal communication with the steering execution unit through the CAN bus, which can determine that the steering execution unit dose not obtain the steering angle output signal of the steering feel simulation unit.

According to an embodiment of the present disclosure, the target steering angle is obtained by a steering wheel angle sensor of the vehicle. The steering wheel angle sensor is communicatively connected to the steering-by-wire system through a CAN bus.

In an exemplary embodiment, when the target steering angle of the vehicle is determined, magnitude of the steering angle can be obtained based on the steering wheel angle sensor of the vehicle, and the steering wheel angle sensor is communicatively connected to the steering-by-wire system through the CAN bus. For example, a steering angle sensor SAS of a steering wheel can be used to measure a rotation angle of the steering wheel when the vehicle is steering, and is in communication with the steering-by-wire system through the CAN bus to send the obtained angle to the steering-by-wire system. In this way, when the steering angle output signal of the steering feel simulation unit is not obtained, the target steering angle of the vehicle can be obtained through the steering angle sensor SAS of the steering wheel outside the steering-by-wire system.

According to an embodiment of the present disclosure, when the steering-by-wire system is operating normally, the redundant backup method for the steering-by-wire system further includes: obtaining a functional safety level of a steering angle signal for controlling the steering execution unit; and decomposing functional safety levels of the target steering angle and the steering angle output signal based on the functional safety level of the steering angle signal.

In an exemplary embodiment, when the steering-by-wire system is operating normally, that is, the angle sensor of the current steering feel simulation unit does not fail and the CAN bus does not fail, and the steering feel simulation unit is in normal communication with the steering execution unit, to meet a functional safety goal of wiring control, the safety levels are decomposed to reduce development difficulty during an implementation process. Definition of Automotive Safety Integration Level (ASIL) is to evaluate and quantify risks caused by failure, to achieve safety goals. ASIL is divided into four levels, namely ASILA, ASILB, ASILC, and ASILD. ASILA represents the lowest level, ASILD represents the highest level, and QM represents that safety design does not need to be considered. The functional safety level of the steering angle signal for controlling the steering execution unit is obtained. Subsequent to obtaining the functional safety level of the steering angle signal, the functional safety levels of the target steering angle and the steering angle output signal can be decomposed based on the functional safety level of the steering angle signal. For example, the functional safety level of the steering angle signal for controlling the steering execution unit is obtained as ASILD. When the functional safety level of the steering angle signal from the steering angle sensor SAS of the steering wheel is ASILD, an output signal of the torque and angle sensor TAS with a QM level can meet a level requirement for an output angle signal. When the functional safety level of the steering angle signal from the steering angle sensor SAS of the steering wheel is ASILC, an output signal of the torque and angle sensor TAS with an ASILA level can meet an ASILD level requirement for the angle signal. When the functional safety level of the steering angle signal from the steering angle sensor SAS of the steering wheel is ASILB, an output signal of the torque and angle sensor TAS with an ASILB level can meet the ASILD level requirement for the angle signal. In this way, development complexity of the torque and angle sensor TAS in the steering feel simulation unit can be reduced, which reduces development costs and shortens a development cycle.

According to an embodiment of the present disclosure, the redundant backup method for the steering-by-wire system further includes: controlling the steering execution unit to perform lateral movement based on the steering angle output signal and obtaining an angular position of the steering execution unit, when the steering angle output signal of the steering feel simulation unit is obtained; and synchronizing the steering angle output signal and the target steering angle based on the angular position of the steering execution unit.

In an exemplary embodiment, when the steering angle output signal of the steering feel simulation unit is obtained, the steering execution unit can perform the lateral movement based on the steering angle output signal, realizing the lateral movement of the vehicle. In this case, the angular position of the steering execution unit is obtained. For example, the absolute angle sensor (AAS) is configured in the steering execution unit, and the angular position of the steering execution unit is obtained through the AAS. Subsequent to obtaining the angular position of the steering execution unit, the steering angle output signal and the target steering angle can be synchronized based on the angular position of the steering execution unit to ensure that angles of the steering angle sensor SAS of the steering wheel, the torque and angle sensor TAS, and the absolute angle sensor AAS remain consistent. For example, when the SAS part rolls off the assembly line, zero position calibration is performed on the SAS, which is denoted as S0. When the vehicle rolls off the assembly line, vehicle zero position calibration is performed on the AAS in the steering execution unit, which is denoted as A0. Through the CAN bus, the steering-by-wire system also synchronizes the zero position of the TAS with the zero position of the AAS, which is denoted as T0. When the vehicle is started, the steering execution unit is equipped with a straight-line driving learning module. As long as a condition of straight-line driving learning is met, if the zero position changes subsequent to being compared with the current zero position, it is written to the memory and used as the zero position of the AAS when the vehicle is started next time. In addition, every time the zero position of the AAS is calibrated or straight-line driving learning is performed, the steering-by-wire system corrects the received SAS angle signal through the CAN bus to ensure that the angles of the SAS, the TAS, and the AAS remain consistent. In this way, when the TAS or the steering feel simulation unit fails, the SAS can timely and accurately serve as a backup.

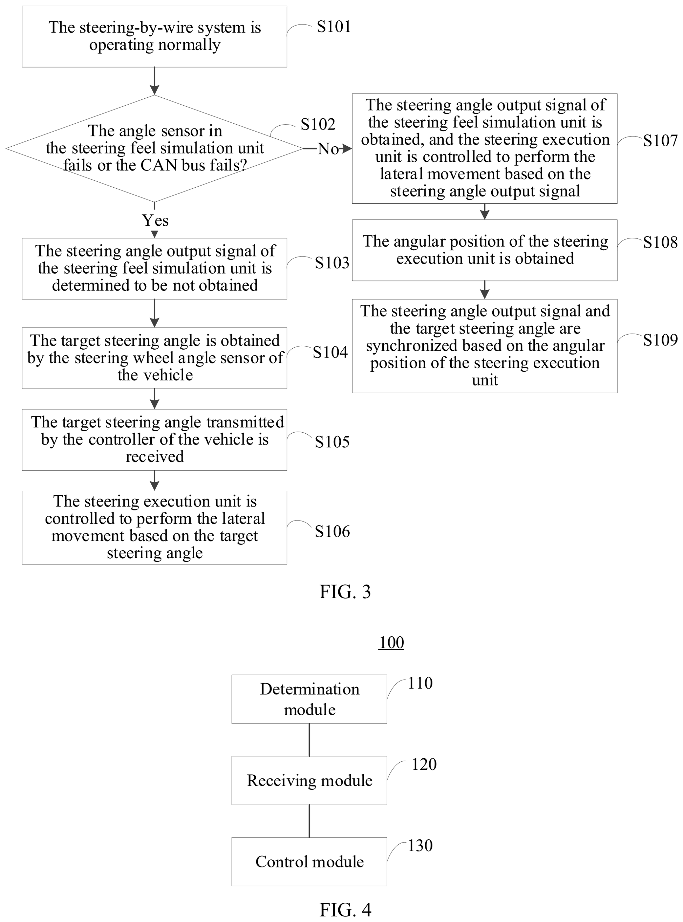

A control method according to the present disclosure is described below with reference to FIG. 3.

As a specific embodiment, the redundant backup method for the steering-by-wire system of the present disclosure may include the following operations at blocks.

At block S101, the steering-by-wire system is operating normally.

At block S102, it is determined whether the angle sensor in the steering feel simulation unit fails or whether the CAN bus fails. If the angle sensor in the steering feel simulation unit fails or the CAN bus fails, block S103 is executed. If both the angle sensor in the steering feel simulation unit and the CAN bus do not fail, step S107 is executed.

At block S103, the steering angle output signal of the steering feel simulation unit is determined to be not obtained.

At block S104, the target steering angle is obtained by the steering wheel angle sensor of the vehicle.

At block S105, the target steering angle transmitted by the controller of the vehicle is received.

At block S106, the steering execution unit is controlled to perform the lateral movement based on the target steering angle.

At block S107, the steering angle output signal of the steering feel simulation unit is obtained, and the steering execution unit is controlled to perform the lateral movement based on the steering angle output signal.

At block S108, the angular position of the steering execution unit is obtained.

At block S109, the steering angle output signal and the target steering angle are synchronized based on the angular position of the steering execution unit.

With the redundant backup method for the steering-by-wire system according to the embodiments of the present disclosure, the steering angle output signal of the steering feel simulation unit is determined to be not obtained, the target steering angle transmitted by the controller of the vehicle is received, and the steering execution unit is controlled to perform the lateral movement based on the target steering angle. In this way, this method can improve fault tolerance performance of the steering-by-wire system and ensure accuracy of vehicle lateral control.

Corresponding to the above-described embodiments, the present disclosure further provides a redundant backup apparatus for a steering-by-wire system.

As illustrated in FIG. 4, the redundant backup apparatus 100 for the steering-by-wire system according to the embodiments of the present disclosure includes: a determination module 110, a receiving module 120, and a control module 130.

The determination module 110 is configured to determine that a steering angle output signal of the steering feel simulation unit is not obtained. The receiving module 120 is configured to receive a target steering angle transmitted by a controller of a vehicle. The control module 130 is configured to control the steering execution unit to perform lateral movement based on the target steering angle.

According to an embodiment of the present disclosure, the steering feel simulation unit includes at least one angle sensor. The steering feel simulation unit is communicatively connected to the steering execution unit through a CAN bus. The determination module 110 determines that the steering angle output signal of the steering feel simulation unit is not obtained, which is specifically used to determine that the steering angle output signal of the steering feel simulation unit is not obtained when the at least one angle sensor fails or the CAN bus fails.

According to an embodiment of the present disclosure, when the at least one angle sensor includes a plurality of angle sensors, the plurality of angle sensors serve as backups for each other.

According to an embodiment of the present disclosure, the target steering angle is obtained by a steering wheel angle sensor of the vehicle. The steering wheel angle sensor is communicatively connected to the steering-by-wire system through a CAN bus.

According to an embodiment of the present disclosure, when the steering-by-wire system is operating normally, the control module 130 is further configured to: obtain a functional safety level of a steering angle signal for controlling the steering execution unit; and decompose functional safety levels of the target steering angle and the steering angle output signal based on the functional safety level of the steering angle signal.

According to an embodiment of the present disclosure, the control module 130 is further configured to: control the steering execution unit to perform lateral movement based on the steering angle output signal and obtain an angular position of the steering execution unit, when the steering angle output signal of the steering feel simulation unit is obtained; and synchronize the steering angle output signal and the target steering angle based on the angular position of the steering execution unit.

It should be noted that, for details not disclosed in the redundant backup apparatus for the steering-by-wire system according to the embodiments of the present disclosure, reference may be made to details disclosed in the redundant backup method for the steering-by-wire system according to the embodiments of the present disclosure, and thus details thereof will be omitted here.

With the redundant backup apparatus for the steering-by-wire system according to the embodiments of the present disclosure, a determination module is configured to determine that the steering angle output signal of the steering feel simulation unit is not obtained, a receiving module is configured to receive the target steering angle transmitted by the controller of the vehicle, and a control module is configured to control the steering execution unit to perform the lateral movement based on the target steering angle. In this way, this apparatus can improve the fault tolerance performance of the steering-by-wire system and ensure the accuracy of the vehicle lateral control.

Corresponding to the above-described embodiments, the present disclosure further provides a computer-readable storage medium.

The computer-readable storage medium according to the embodiments of the present disclosure has a redundant backup program for a steering-by-wire system stored thereon. The redundant backup program for the steering-by-wire system, when executed by a processor, implements the above-described redundant backup method for the steering-by-wire system.

The computer-readable storage medium according to the embodiments of the present disclosure can improve the fault tolerance performance of the steering-by-wire system and ensure the accuracy of the vehicle lateral control by executing the above-described redundant backup method for the steering-by-wire system.

Corresponding to the above-described embodiments, the present disclosure further provides a steering-by-wire system.

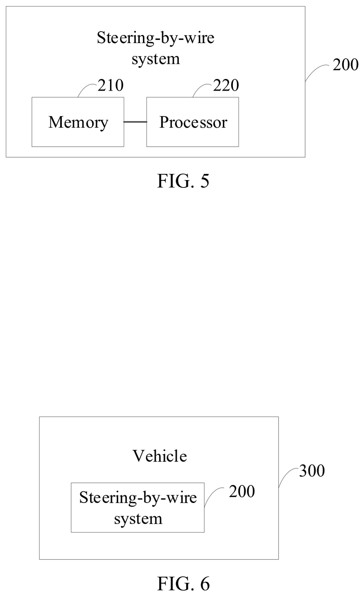

As illustrated in FIG. 5, the steering-by-wire system 200 according to the embodiments of the present disclosure may include: a steering feel simulation unit (not shown in the figure); a steering execution unit (not shown in the figure); a memory 210; a processor 220; and a redundant backup program for a steering-by-wire system stored in the memory 210 and executable on the processor 220. The processor 220 implements, when executing the redundant backup program for the steering-by-wire system, the above-described redundant backup method for the steering-by-wire system.

The steering-by-wire system according to the embodiments of the present disclosure can improve the fault tolerance performance of the steering-by-wire system and ensure the accuracy of the vehicle lateral control by executing the above-described redundant backup method for the steering-by-wire system.

Corresponding to the above-described embodiments, the present disclosure further provides a vehicle.

As illustrated in FIG. 6, the vehicle 300 according to the embodiments of the present disclosure may include a steering-by-wire system 200.

The vehicle according to the embodiments of the present disclosure can improve the fault tolerance performance of the steering-by-wire system and ensure the accuracy of the vehicle lateral control by including the above-described steering-by-wire system.

It should be noted that, the logic and/or step described in other manners herein or shown in the flow chart, for example, a particular sequence table of executable instructions for realizing the logical function, may be specifically achieved in any computer readable medium to be used by the instruction execution system, device or equipment (such as the system based on computers, the system including processors or other systems capable of obtaining the instruction from the instruction execution system, device and equipment and executing the instruction), or to be used in combination with the instruction execution system, device and equipment. As to the specification, "the computer readable medium" may be any device adaptive for including, storing, communicating, propagating or transferring programs to be used by or in combination with the instruction execution system, device or equipment. More specific examples of the computer readable medium include but are not limited to: an electronic connection (an electronic device) with one or more wires, a portable computer enclosure (a magnetic device), a random access memory (RAM), a read only memory (ROM), an erasable programmable read-only memory (EPROM or a flash memory), an optical fiber device and a portable compact disk read-only memory (CDROM). In addition, the computer readable medium may even be a paper or other appropriate medium capable of printing programs thereon, this is because, for example, the paper or other appropriate medium may be optically scanned and then edited, decrypted or processed with other appropriate methods when necessary to obtain the programs in an electric manner, and then the programs may be stored in the computer memories.

It should be understood that each part of the present disclosure may be realized by the hardware, software, firmware or their combination. In the above embodiments, a plurality of steps or methods may be realized by the software or firmware stored in the memory and executed by the appropriate instruction execution system. For example, if it is realized by the hardware, likewise in another embodiment, the steps or methods may be realized by one or a combination of the following techniques known in the art: a discrete logic circuit having a logic gate circuit for realizing a logic function of a data signal, an application-specific integrated circuit having an appropriate combination logic gate circuit, a programmable gate array (PGA), a field programmable gate array (FPGA), etc.

Reference throughout this specification to "an embodiment", "some embodiments", "an example", "a specific example", or "some examples" means that a particular feature, structure, material, or characteristic described in connection with the embodiment or example is included in at least one embodiment or example of the present disclosure. In this specification, exemplary descriptions of aforesaid terms are not necessarily referring to the same embodiment or example. Further, the particular features, structures, materials, or characteristics may be combined in any suitable manner in one or more embodiments or examples.

In addition, terms "first" and "second" are only used for descriptive purposes, and cannot be understood as indicating or implying relative importance or implicitly indicating the number of indicated technical features. Therefore, the features defined with "first" and "second" may explicitly or implicitly include at least one of the features. In the description of the present disclosure, "plurality" means at least two, such as two and three, unless otherwise specifically defined.

In the present disclosure, unless otherwise clearly specified and limited, terms such as "install", "connect", "connect to", "fix", and the like should be understood in a broad sense. For example, it may be a fixed connection or a detachable connection or connection as one piece; mechanical connection or electrical connection or communication; direct connection or indirect connection through an intermediate; internal communication of two components or the interaction relationship between two components, unless otherwise specifically defined. For those of ordinary skill in the art, the specific meaning of the above-mentioned terms in the present disclosure can be understood according to specific circumstances.

Although embodiments of the present disclosure have been illustrated and described above, it should be understood that the above embodiments are merely exemplary, and cannot be construed to limit the present disclosure. For those skilled in the art, changes, modifications, substitutions, and variations can be made to the embodiments without departing from the scope of the present disclosure.

## Claims

1. A redundant backup method for a steering-by-wire system, wherein the steering-by-wire system comprises a steering feel simulation unit and a steering execution unit, and the method comprises:
determining that a steering angle output signal of the steering feel simulation unit is not obtained;
receiving a target steering angle transmitted by a controller of a vehicle; and
controlling the steering execution unit to perform lateral movement based on the target steering angle.

2. The redundant backup method for the steering-by-wire system according to claim 1, wherein:
the steering feel simulation unit comprises at least one angle sensor, and the steering feel simulation unit is communicatively connected to the steering execution unit through a CAN bus; and
said determining that the steering angle output signal of the steering feel simulation unit is not obtained comprises:
determining that the steering angle output signal of the steering feel simulation unit is not obtained, when the at least one angle sensor fails or the CAN bus fails.

3. The redundant backup method for the steering-by-wire system according to claim 2, wherein when the at least one angle sensor comprises a plurality of angle sensors, the plurality of angle sensors serve as backups for each other.

4. The redundant backup method for the steering-by-wire system according to any one of claims 1 to 3, wherein:
the target steering angle is obtained by a steering wheel angle sensor of the vehicle, and
the steering wheel angle sensor is communicatively connected to the steering-by-wire system through a CAN bus.

5. The redundant backup method for the steering-by-wire system according to any one of claims 1 to 4, wherein when the steering-by-wire system is operating normally, the method further comprises:
obtaining a functional safety level of a steering angle signal for controlling the steering execution unit; and
decomposing functional safety levels of the target steering angle and the steering angle output signal based on the functional safety level of the steering angle signal.

6. The redundant backup method for the steering-by-wire system according to any one of claims 1 to 5, further comprising:
controlling the steering execution unit to perform lateral movement based on the steering angle output signal and obtaining an angular position of the steering execution unit, when the steering angle output signal of the steering feel simulation unit is obtained; and
synchronizing the steering angle output signal and the target steering angle based on the angular position of the steering execution unit.

7. A redundant backup apparatus for a steering-by-wire system, wherein the steering-by-wire system comprises a steering feel simulation unit and a steering execution unit, and the apparatus comprises:
a determination module configured to determine that a steering angle output signal of the steering feel simulation unit is not obtained;
a receiving module configured to receive a target steering angle transmitted by a controller of a vehicle; and
a control module configured to control the steering execution unit to perform lateral movement based on the target steering angle.

8. A computer-readable storage medium, having a redundant backup program for a steering-by-wire system stored thereon, wherein the redundant backup program for the steering-by-wire system, when executed by a processor, implements the redundant backup method for the steering-by-wire system according to any one of claims 1 to 6.

9. A steering-by-wire system, comprising:
a steering feel simulation unit;
a steering execution unit;
a memory;
a processor; and
a redundant backup program for the steering-by-wire system stored in the memory and executable on the processor,
wherein the processor implements, when executing the redundant backup program for the steering-by-wire system, the redundant backup method for the steering-by-wire system according to any one of claims 1 to 6.

10. A vehicle, comprising the steering-by-wire system according to claim 9.
